# EUROPEAN PATENT APPLICATION

(11) **EP 4 318 288 A1**
(43) Date of publication of application: **07.02.2024**
(21) Application number: 21932870.5
(22) Date of filing: 22.03.2021
(51) Int. Cl.: G06F 21/62

(54) **INFORMATION PROVIDING METHOD**

(71) Applicant: Hitachi, Ltd., Tokyo 100-8280 (JP)
(72) Inventor: SATO, Keiichi, Tokyo 100-8280 (JP); KAINUKI, Tsutomu, Tokyo 100-8280 (JP); YOSHINO, Masayuki, Tokyo 100-8280 (JP); YAMAMOTO, Mayuko, Tokyo 100-8280 (JP); TSUBOYAMA, Akira, Tokyo 100-8280 (JP); NAGURA, Shiroh, Tokyo 100-8280 (JP)
(74) Representative: MERH-IP Matias Erny Reichl Hoffmann Patentanwälte PartG mbB
(86) International application number: PCT/JP2021/011775
(87) International publication number: WO 2022/201257

(57) **Abstract**

An information providing method to be executed by an information providing system includes: a first step of acquiring, by a second terminal, the action data corresponding to the data ID from a management server when the second terminal transmits to the management server a request to acquire the personal information including the data ID; a second step of acquiring, by the second terminal, the personal information from the management server when the second user has access authority for the personal information associated with the data ID; and a third step of transmitting, by the second terminal, the information to the first terminal of a first user identified by the personal information when the second terminal acquires the action data and the personal information.

## Description

### BACKGROUND

This invention relates to an information providing method of providing information.

JP 2012-155580 A discloses a behavior support system for supporting the behavior of a user based on behavior characteristics without aggregating information related to contents of the behavior characteristics into one system.

The behavior support system includes: a trigger provider system 20 for detecting an event to be a trigger; a service provider system 30 for providing a service of executing the behavior based on the behavior characteristics; and a link server 10 for linking key information corresponding to the trigger and the behavior. The trigger provider system 20 holds a filter 24 for extracting the trigger and a trigger key, the service provider system 30 holds service contents 33 and a service key, and the link server 10 holds behavior characteristics 13 of the trigger key and the service key. The trigger provider system 20 detects trigger generation and notifies the link server 10 of the trigger key, the link server 10 notifies the service provider system 30 of the service key corresponding to the trigger key, and the service provider system 30 provides the service corresponding to the service key.

JP 2015-187828 A discloses an information management system for separating information that enables each individual person to be identified from information that is not enough to identify each individual person and store the information security-consciously or privacy-consciously. The information management system comprises a first database and a second database provided in one or a plurality of data centers, the first database stores data encrypted in the form that cannot be decoded using a searchable encryption technique in the data center, and the second database stores data associated with the data stored in the first database.

However, in JP 2012-155580 A described above, the user ID is grasped in advance by the service business, and hence the protection of the privacy of the user is insufficient. In addition, in JP 2015-187828 A described above, there is no disclosure of an access restriction when there is a service business that wants to use the data.

### SUMMARY

An object of this invention is to use data more actively by data users while protecting the privacy of service users.

An aspect of the invention disclosed in this application is an information providing method to be executed by an information providing system, the information providing system including a management server, a first terminal of a first user, a second terminal of a second user which provides information to the first user, and a third terminal of an operator which operates provision of the information from the second user to the first user by using the management server, the management server including a first database configured to store, for each first user, personal information on the each first user and a data ID unique to the each first user associated with the personal information, a second database configured to store action data indicating an action of a person for each data ID, and a third database configured to manage an access authority from the second user for the data ID in the first database, the information providing method comprising: a first step of acquiring, by the second terminal, the action data corresponding to the data ID from the management server when the second terminal transmits to the management server a request to acquire the personal information including the data ID; a second step of acquiring, by the second terminal, the personal information from the management server when the second user has access authority for the personal information associated with the data ID; and a third step of transmitting, by the second terminal, the information to the first terminal of the first user identified by the personal information when the second terminal acquires the action data and the personal information.

According to the at least one representative embodiment of this invention, data can be used more actively by data users while protecting the privacy of service users. Other objects, configurations, and effects than those described above are clarified by the following description of an embodiment.

### BRIEF DESCRIPTION OF THE DRAWINGS

FIG. 1 is an explanatory diagram for illustrating a system configuration example of an information providing system.
FIG. 2 is a block diagram for illustrating a hardware configuration example of each of computers.
FIG. 3 is a table for showing an example of the first DB.
FIG. 4 is a diagram of tables for showing an example of the second DB.
FIG. 5 is a diagram of tables for showing an example of the third DB.
FIG. 6 is an explanatory diagram for illustrating an example of an advance preparation sequence for the service user.
FIG. 7 is an explanatory diagram for illustrating an example of an advance preparation sequence for the data user.
FIG. 8 is an explanatory diagram for illustrating an information providing sequence example (first half).
FIG. 9 is an explanatory diagram for illustrating an information providing sequence example (second half).
FIG. 10 is a table for showing an example of an access authority management table in the second embodiment.
FIG. 11 is an explanatory diagram for illustrating an information providing sequence example (first half) in the second embodiment.
FIG. 12 is an explanatory diagram for illustrating an application example of the third embodiment.
FIG. 13 is a table for showing an example of the first DB in the third embodiment.
FIG. 14 is a diagram of table for showing an example of the second DB in the third embodiment.
FIG. 15 is an explanatory diagram for illustrating an information providing sequence example in the third embodiment.

### DETAILED DESCRIPTION OF THE EMBODIMENTS

### [First Embodiment]

In a first embodiment of this invention, description is given of an example of providing service information on a data user to a service user.

### <System Configuration Example>

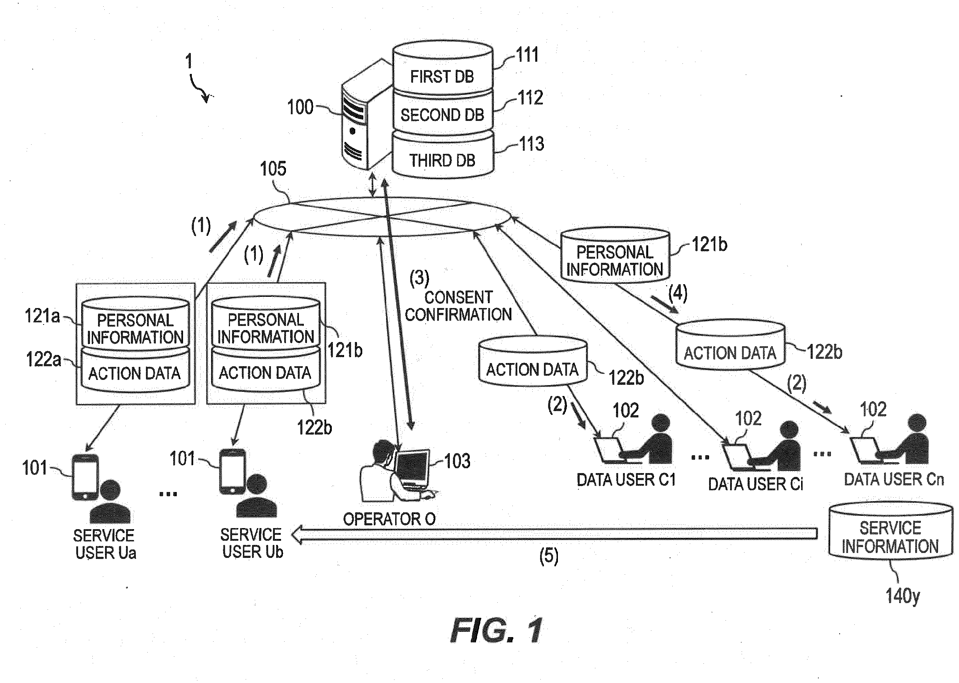

FIG. 1 is an explanatory diagram for illustrating a system configuration example of an information providing system. An information providing system 1 includes a management server 100, a first terminal 101, a second terminal 102, and a third terminal 103. The management server 100, the first terminal 101, the second terminal 102, and the third terminal 103 are communicably coupled via a network 105 such as the Internet, a local area network (LAN), or a wide area network (WAN).

The management server 100 is a computer which manages a first DB 111, a second DB 112, and a third DB 113. The first DB 111 is a database which manages personal data relating to service users Ua, ..., Ub (when the service users are not distinguished, those service users are hereinafter simply referred to as "service user U"). The second DB 112 is a database which anonymously manages the action of the service user U, and manages the action and access source of an access target. The third DB 113 is a database which manages access authorities and data acquisition conditions for the data stored in the first DB 111 and the second DB 112.

The first terminal 101 is a computer to be operated by the service user U, and can access the first DB 111 to the third DB 113. The service user U means a person who uses a service provided by a data user C1 to Cn (n is an integer of 1 or more; when the data users are not distinguished, those data users are hereinafter simply referred to as "data user C*i*" (i is an integer satisfying 1≤*i≤*n)). The first terminal 101 includes, for example, an acceleration sensor and a positioning sensor. The first terminal 101 is, for example, a smartphone. The first terminal 101 may be a wearable device such as a smartwatch. A wearable device can communicate to and from the management server 100 directly or indirectly via a smartphone. The first terminal 101 may be able to communicate to and from a non-wearable device such as a weight meter, for example.

The first terminal 101 stores pieces of personal information 121a, ..., 121b (when the pieces of personal information are not distinguished, the pieces of personal information are hereinafter simply referred to as "personal information 121") on the service users Ua, ..., Ub, respectively. The personal information 121 is information which can uniquely identify the service user U, for example, is a full name, a date of birth, or contact information on the service user U.

The first terminal 101 detects and stores pieces of action data 122a, ..., 122b (when the pieces of action data are not distinguished, the pieces of action data are hereinafter simply referred to as "action data 122") on the service users Ua, ..., Ub, respectively. The action data 122 is, for example, data for identifying measurement details at each date and time of, for example, a step count, a blood pressure, a body weight, and place of stay of the service user U.

The second terminal 102 is a computer to be operated by the data user Ci, and can access the second DB 112 and the third DB 113. The data user Ci is a business which uses the data stored in the second DB 112 and provides service information to the service user U. The second terminal 102 is, for example, a computer such as a personal computer, a smartphone, or a tablet computer.

The third terminal 103 is a computer to be operated by an operator O, and can access the third DB 113. The third terminal 103 refers to the third DB 113 to confirm which data user Ci has obtained consent from which service user U to access the personal information 121 of that service user U.

Operation of the information providing system 1 is now described with reference to FIG. 1.
(1) The first terminals 101 of the service users Ua and Ub upload the pieces of personal information 121a and 121b and the pieces of action data 122a and 122b, respectively, to the management server 100. The pieces of personal information 121a and 121b are stored in the first DB 111, and the pieces of action data 122a and 122b are stored in the second DB 112.
(2) The second terminal 102 of each of the data users C1 and Cn accesses the second DB 112 and acquires the action data 122b of the service user Ub. However, the data users C1 and Cn do not know which service user U's action data 122 the acquired action data 122b belongs to.
(3) The third terminal 103 of the operator O refers to the third DB 113 to confirm whether the data users C1 and C*n* have obtained consent to access the personal information 121b on the service user Ub. In this case, it is assumed that only the data user C*n* has obtained consent.
(4) The second terminal 102 of the data user C*n* can download the personal information 121b on the service user Ub from the first DB 111. The second terminal 102 of the data user C*n* associates the personal information 121b with the action data 122b. It is assumed that the personal information 121b includes an email address of the service user Ub as contact information on the service user Ub.
(5) The second terminal 102 of the data user C*n* transmits service information 140y on the data user C*n* to the first terminal 101 of the service user Ub via the network 105 with the email address of the service user Ub as the destination.

As a result, through protecting the personal information 121b on the service user Ub from being leaked from the data user C1, which has not obtained consent, while making the personal information 121b available to the data user C*n*, which has obtained consent, the service information 140y can be provided to the service user Ub, and the action data 122b is used more actively.

### <Hardware Configuration Example of Computers (the management server 100, the first terminal 101 to the third terminal 103)>

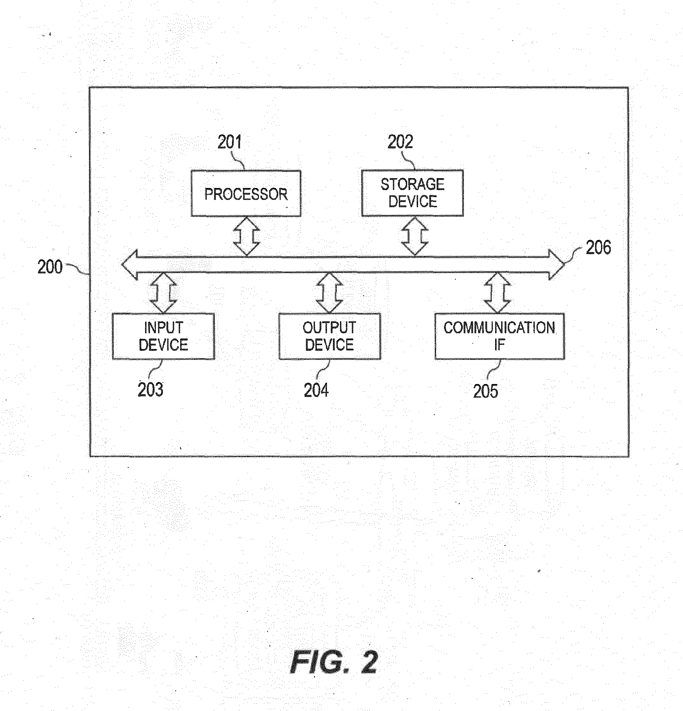

FIG. 2 is a block diagram for illustrating a hardware configuration example of each of computers (the management server 100, the first terminal 101 to the third terminal 103). A computer 200 includes a processor 201, a storage device 202, an input device 203, an output device 204, and a communication interface (communication IF) 205. The processor 201, the storage device 202, the input device 203, the output device 204, and the communication IF 205 are coupled to one another through a bus 206. The processor 201 is configured to control the computer 200. The storage device 202 serves as a work area for the processor 201. The storage device 202 is also a non-transitory or transitory recording medium configured to store various programs and various kinds of data. Examples of the storage device 202 include a read only memory (ROM), a random-access memory (RAM), a hard disk drive (HDD), and a flash memory. The input device 203 is configured to input data. Examples of the input device 203 include a keyboard, a mouse, a touch panel, a numeric keypad, a scanner and a microphone. The output device 204 is configured to output data. Examples of the output device 204 include a display, a printer, and a speaker. The communication IF 205 is coupled to the network 105, and is configured to transmit and receive data.

### <Databases>

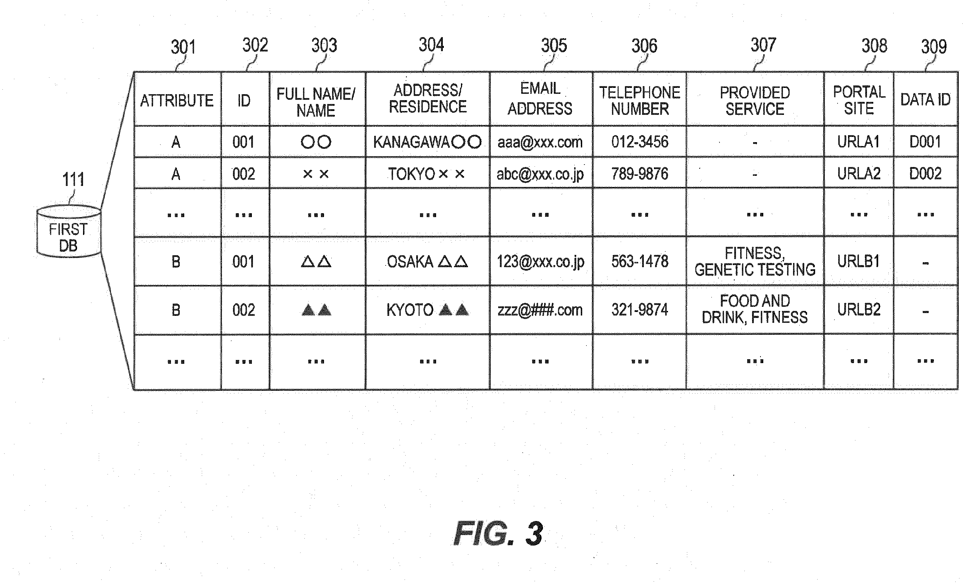

FIG. 3 is a table for showing an example of the first DB 111. The first DB 111 is a database which stores the personal information 121 on the service user U and unique information on the data user Ci. The personal information 121 is invariant information that can uniquely identify the individual service user U. The unique information is information that can uniquely identify the data user Ci. Specifically, for example, the first DB 111 includes, as data items, an attribute 301, an ID 302, a full name/name 303, an address/residence 304, an email address 305, a telephone number 306, a provided service 307, a portal site 308, and a data ID 309. An entry indicating the personal information 121 on the service user U or the unique information on the data user C*i* is formed by combining the values of the respective data items 301 to 309 in the same row.

The attribute 301 is a data item which stores, as a value, information for distinguishing whether the person identified by the entry is the service user U or the data user C*i*. When the value of the attribute 301 is "A", the service user U is indicated, and when the value is "B", the data user C*i* is indicated.

The ID 302 is a data item which stores, as a value, identification information for uniquely identifying the service user U or the data user C*i*. The same ID may be used by the service user U and the data user C*i*. Through combining the value of the ID 302 with the value of the attribute 301, the service user U and the data user C*i* are uniquely identified. For example, "A001" and "A002" each uniquely identify a service user U, and "B001" and "B002" each uniquely identify a data user C*i*.

The full name/name 303 is a data item which stores the full name of the service user U or the name of the data user C*i* as a value. The address/residence 304 is a data item which stores the address of the service user U or the residence of the data user C*i* as a value. The email address 305 is a data item which stores the email address of the service user U or the data user C*i* as a value. The telephone number 306 is a data item which stores the telephone number of the service user U or the data user C*i* as a value.

The provided service 307 is a data item which stores the service provided by the data user Ci as a value. The value of the provided service 307 is not stored in the entry for the service user U. The portal site 308 is a data item which stores a uniform resource locator (URL) of a portal site of the service user U or the data user C*i* as a value.

The data ID 309 is a data item which stores information associating the entry with the action data of the second DB 112 as a value. The data ID 309 value is not stored in the entry for the data user C*i*.

In addition to the data items described above, the personal information 121 may include invariant information for uniquely identifying an individual, for example, a date of birth, a gender, a resident card code, a national identification number, a health insurance number, a passport number, and a driver's license number.

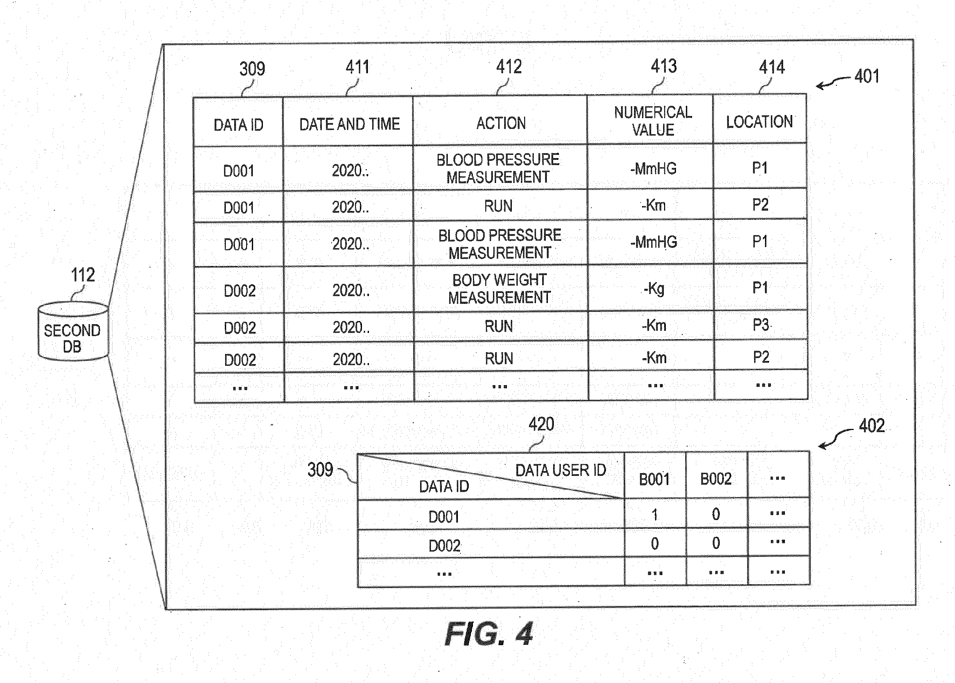

FIG. 4 is a diagram of tables for showing an example of the second DB 112. The second DB 112 has an action history DB 401 and an access management table 402. The action history DB 401 is a database which stores an action history of a certain person as the action data 122. From the action data 122 itself, it is not possible to identify whose action is indicated. The action data 122 accompanies the personal information 121. Specifically, for example, the action history DB 401 includes, as data items, a data ID 309, a date and time 411, an action 412, a numerical value 413, and a location 414. An entry indicating the action data 122 of the service user U identified by the data ID 309 is formed by combining the values of the respective data items 309 and 411 to 414 in the same row.

The date and time 411 is a data item which stores, as a value, the date and time at which the action data 122 is detected by the first terminal 101. The action 412 is a data item which stores information for identifying the action of the service user U as a value. The numerical value 413 is a data item which stores, as a value, the value detected by the action 412. The location 414 is a data item which stores, as a value, the position at which the service user U existed when the service user U performed the action 412.

The action 412 and the numerical value 413 may be the result of a health checkup, or may be a purchased item and the number thereof (not shown). The action data 122 may also include personal information 121 which does not identify the individual service user U, for example, the gender and an age group of the service user U.

The access management table 402 is a table for managing which data user Ci is requesting access to the personal information 121 of which data ID 309, and can be accessed by the second terminal 102. The data user ID 420 is identification information for uniquely identifying the data user C*i*, and is a combination of the value "B" of the attribute 301 and the value of the ID 302. In the access management table 402, "1" indicates that there is an access request, and "0" indicates that there is no access request. For example, a data user having the data user ID 420 "B001" indicates that he or she wants to access the personal information 121 of the service user U having the data ID 309 "D001."

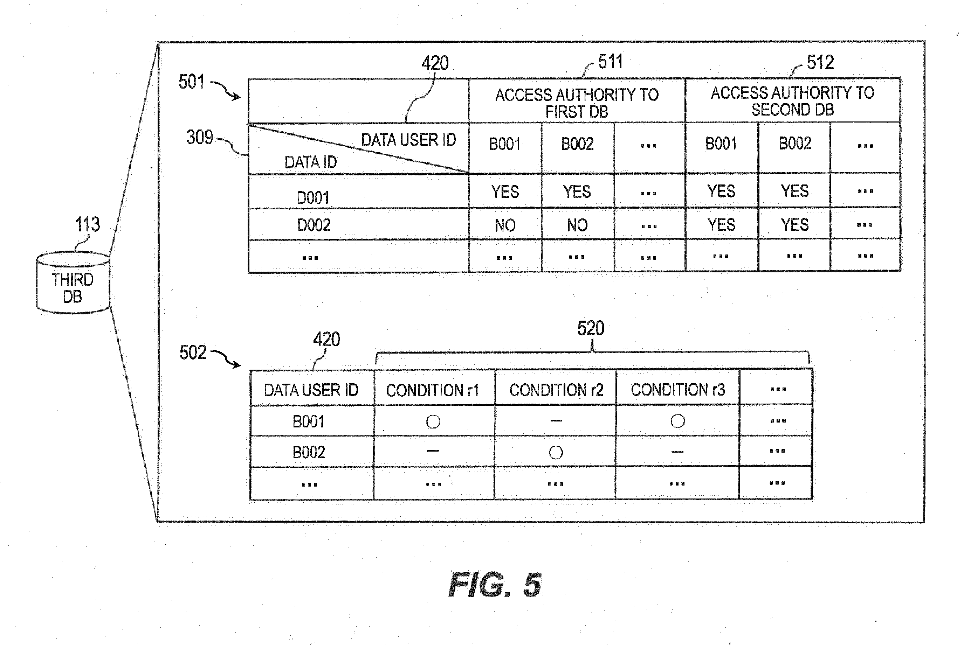

FIG. 5 is a diagram of tables for showing an example of the third DB 113. The third DB 113 includes an access authority management table 501 and a condition management table 502. The access authority management table 501 is a table for showing which data user C*i* has access authority for the entry of which data ID 309 in which database. Specifically, for example, the access authority management table 501 defines, in the access authority 511 to the first DB 111, whether or not there is access authority for the data ID 309 for each data user ID 420, and in the access authority 512 to the second DB 112, defines whether or not there is access authority for the data ID 309 of each data user ID 420.

In the first embodiment, for convenience of description, it is assumed that access authority for all data users C*i* is set to "yes" for all the data IDs 309, but the access authority for any one of the data users C*i* may be set to "no" for any one of the data IDs 309. The first terminal 101 can update the access authority management table 501 for the entry having the data ID 309 of the service user U.

The condition management table 502 is a table for managing the conditions for the second terminal 102 to search the action data 122. Which condition 520 is to be applied ("circle" indicates application) is set for each data user ID 420. The condition 520 refines the action data 122. For example, a condition r1 is a condition that a walking distance in one week is equal to or less than a predetermined distance, a condition r2 is a condition that the amount of alcohol consumed in one week is equal to or more than a predetermined amount, and a condition r3 is a condition that a credit card usage amount for one month is 50,000 yen or more and less than 100,000 yen.

### <Sequence of Information Providing System 1>

Next, the sequence in the information providing system 1 is described.

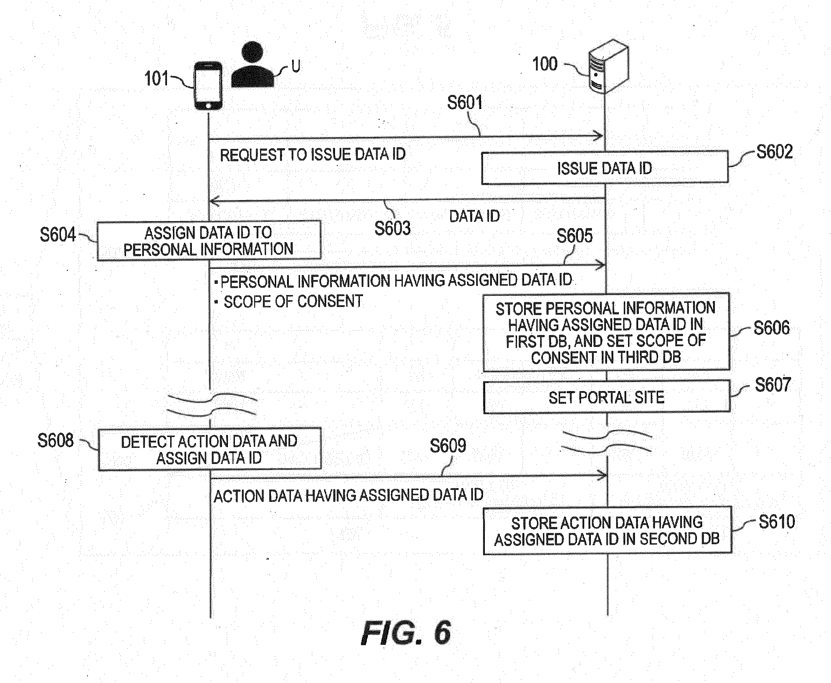

FIG. 6 is an explanatory diagram for illustrating an example of an advance preparation sequence for the service user U. The first terminal 101 transmits to the management server 100 a request to issue a data ID based on an operation input by a service user (Step S601). When the management server 100 receives the request to issue a data ID, the management server 100 issues a unique data ID 309 to the service user U (Step S602) and transmits the issued data ID 309 to the first terminal 101 (Step S603).

When the first terminal 101 receives the data ID 309, the first terminal 101 assigns the data ID 309 to the personal information 121 stored in the first terminal 101 (Step S604), and transmits the personal information 121 having the assigned data ID 309 and a scope of consent to the management server 100 (Step S605). The scope of consent is information indicating which data user Ci may access which database.

The management server 100 stores the personal information 121 having the assigned data ID 309 in the first DB 111, and sets the scope of consent in the access authority management table 501 of the third DB 113 (Step S606). The management server 100 also sets a portal site for the service user U of the first terminal 101 (Step S607). Specifically, for example, the management server 100 creates a web page of a portal site for the service user U of the first terminal 101, and sets the URL of the web page in the portal site 308.

Then, the first terminal 101 detects the action data 122 of the service user U, assigns the data ID 309 (Step S608), and transmits the action data 122 having the assigned data ID 309 to the management server 100 (Step S609). When the management server 100 receives the action data 122 having the assigned data ID 309, the management server 100 stores the action data 122 having the assigned data ID 309 in the action history DB 401 of the second DB 112 (Step S610). The action data 122 is accumulated in the action history DB 401 by repeating Step S608 and Step S609.

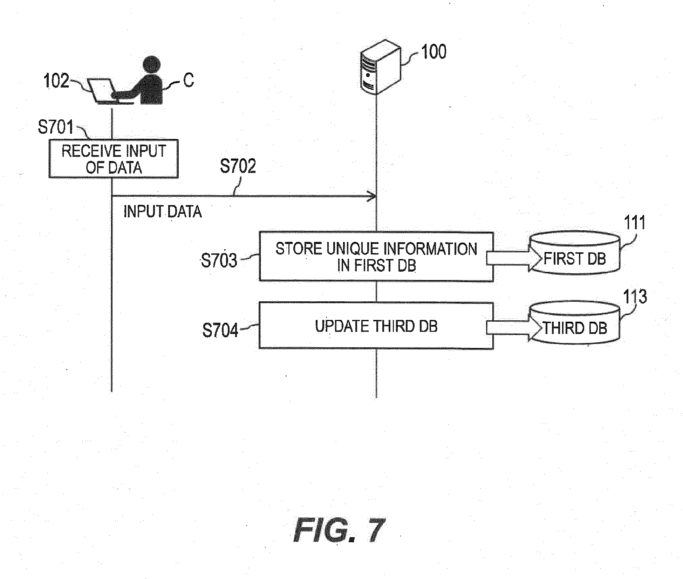

FIG. 7 is an explanatory diagram for illustrating an example of an advance preparation sequence for the data user C*i*. The second terminal 102 receives input of data (unique information and setting conditions) based on an operation input by the data user C*i* (Step S701), and transmits the data to the management server 100 (Step S702).

When the management server 100 receives the data (unique information and setting conditions), the management server 100 stores the unique information in the first DB 111 (Step S703), and updates the condition management table 502 in the third DB 113 with the setting conditions (Step S704). This completes the advance preparation of the data user C*i*.

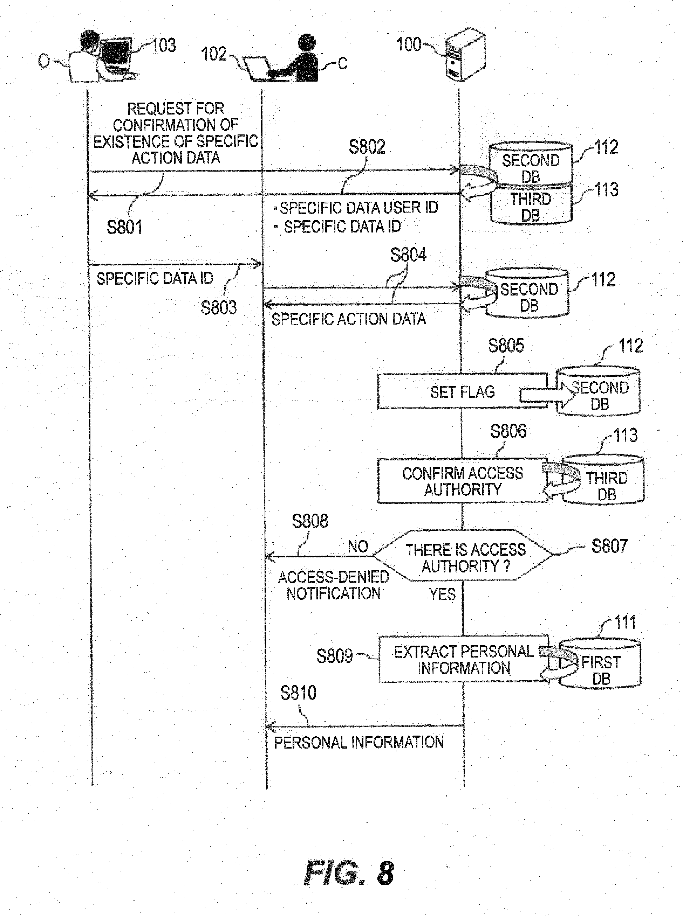

FIG. 8 is an explanatory diagram for illustrating an information providing sequence example (first half). The third terminal 103 transmits to the management server 100 a request for confirmation of the existence of specific action data 122 based on an operation by the operator O (Step S801). The condition 520 or the data user ID 420 is included in the existence confirmation request. The existence confirmation request is transmitted at a fixed cycle or when an operation is input by the operator O.

When the condition 520 is included in the existence confirmation request, the management server 100 refers to the condition management table 502 to identify the data user ID 420 (hereinafter referred to as "specific data user ID 420") which satisfies the condition 520, and refers to the action history DB 401 to identify the data ID 309 (hereinafter referred to as "specific data ID 309") of the action data (hereinafter referred to as "specific action data") 122 corresponding to the condition 520. The management server 100 then transmits the specific data user ID 420 and the specific data ID 309 to the third terminal 103 (Step S802).

Further, when the data user ID 420 is included in the existence confirmation request, the management server 100 refers to the condition management table 502 to identify the condition 520 corresponding to the data user ID 420, refers to the action history DB 401 to identify the specific data ID 309 and the specific data user ID 420 of the specific action data 122 corresponding to the condition 520, and transmits the specific data ID 309 and the specific data user ID 420 to the third terminal 103 (Step S802).

When the specific data ID 309 and the specific data user ID 420 are received, the third terminal 103 transmits an existence notification of the specific data ID 309 to the second terminal 102 identified by the specific data user ID 420 (Step S803). As a result, a specific data user Ci can operate the second terminal 102 to acquire the specific action data including the specific data ID 309 from the second DB 112 (Step S804). However, when the access authority 512 for the specific data user Ci to access the second DB 112 is set to "no" for the specific data ID 309, the specific data user C*i* cannot acquire the specific action data 122 including the specific data ID 309 from the second DB 112.

After the specific data user ID 420 and the specific data ID 309 are transmitted to the third terminal 103 (Step S802), the management server 100 sets, in the access management table 402, a flag indicating that there is an access request to "1" for the combination of the specific data user ID 420 and the specific data ID 309 (Step S805). The management server 100 may execute Step S805 in response to a request from the second terminal 102 which has received the existence notification of the specific data ID 309.

Then, for the access request having the set flag, the management server 100 refers to the access authority management table 501, and confirms whether or not there is access authority for the personal information 121 (Step S806). Specifically, for example, the management server 100 confirms whether or not the specific data user C*i* has access authority for the personal information 121 of the specific service user U corresponding to the specific data ID 309, that is, whether or not the specific data user C*i* has obtained consent from the specific service user U to access the personal information 121 of the specific service user U.

When the specific data user Ci does not have access authority ("No" in Step S807), the management server 100 transmits, to the second terminal 102 of the specific data user C*i*, an access-denied notification denying access to the personal information 121 of the specific service user U (Step S808). Meanwhile, when the specific data user C*i* has access authority ("Yes" in Step S807), the management server 100 extracts the personal information 121 corresponding to the specific data ID 309 from the first DB 111 (Step S809), and transmits the extracted personal information 121 to the second terminal 102 of the specific data user C*i* (Step S810).

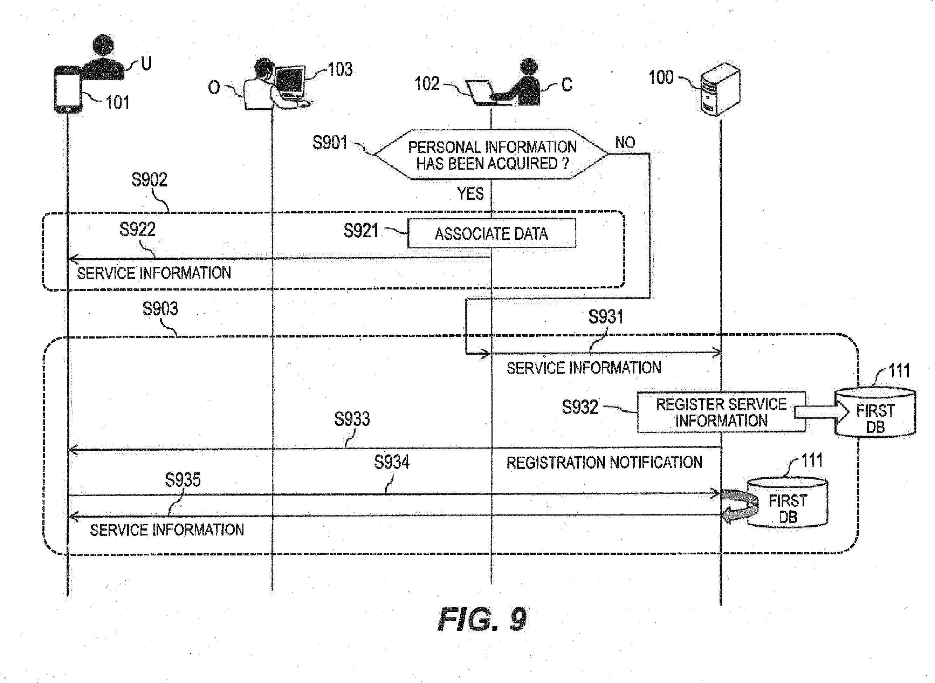

FIG. 9 is an explanatory diagram for illustrating an information providing sequence example (second half). The second terminal 102 determines whether or not the personal information 121 has been acquired (Step S901). When the personal information 121 has been acquired ("Yes" in Step S902), first service information providing processing (Step S902) is executed, and when the access-denied notification has been received ("No" in Step S902), second service information providing processing (Step S903) is executed.

The first service information providing processing (Step S902) is processing in which the specific data user Ci directly provides the service information to the specific service user U. Specifically, for example, the second terminal 102 associates the acquired specific action data 122 and personal information 121 with the specific data ID 309 (Step S921). As a result, the specific data user Ci can identify the specific service user U and the transmission destination. The second terminal 102 then transmits the service information relating to the provided service 307 of the specific data user Ci to the first terminal 101 of the specific service user U (Step S922).

The second service information providing processing (Step S903) is processing in which the specific data user Ci indirectly provides the service information to the specific service user U. Specifically, for example, the second terminal 102 transmits the service information to the management server 100 (Step S931). The management server 100 receives the service information, refers to the first DB 111 to register the received service information in the portal site of the specific service user U (Step S932), and transmits a registration notification to the first terminal 101 of the specific service user U (Step S933).

When the first terminal 101 receives the registration notification, the first terminal 101 accesses the portal site of the specific service user U (Step S934), and acquires the registered service information (Step S935). As a result, the specific service user U can obtain the service information on the specific data user Ci without the personal information 121 being known to the specific data user.

In this way, according to the first embodiment, it is possible for data to be used more actively by data users Ci while protecting the privacy of the service users U.

### [Second Embodiment]

In the first embodiment, the access authority management table 501 is used, but in a second embodiment of this invention, an access authority management table in which the access authority can be set for each data item is used. It should be noted that, in the second embodiment, in order to focus on the differences from the first embodiment, parts that are the same as in the first embodiment are denoted by using the same reference numerals, and description thereof is omitted.

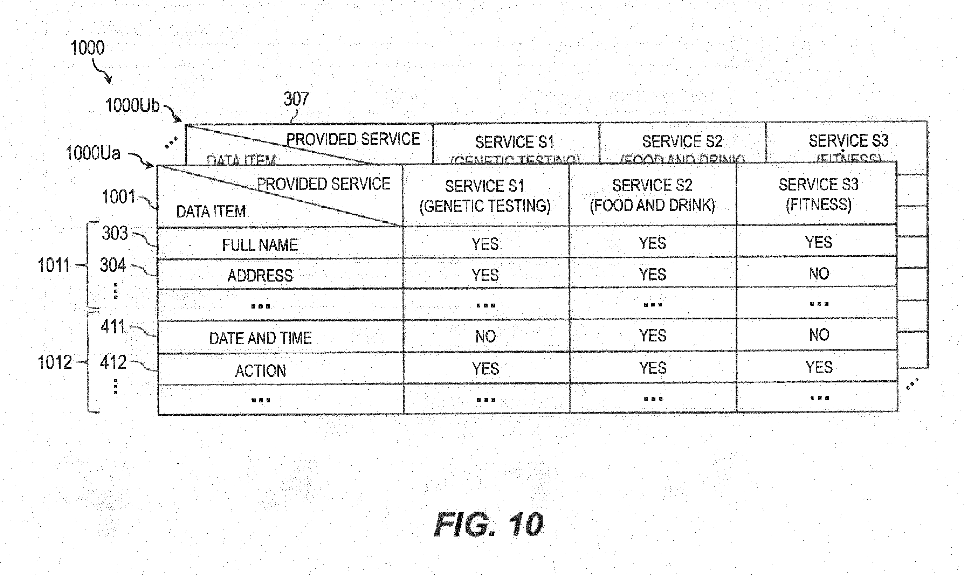

FIG. 10 is a table for showing an example of an access authority management table in the second embodiment. An access authority management table 1000 is a table for showing which data user Ci has access authority for which data item of which service user U in which database. The access authority management table 1000 is stored in the third DB 113. A separate access authority management table 1000 is set for each data ID 309 (that is, service user U) for each data user C*i*. in FIG. 10, there is shown an access authority management table 1000 for a certain data user Ci.

The access authority management table 1000 is built from an access authority management table 1000Ua associated with the data ID 309 of the service user Ua to an access authority management table 1000Ub associated with the data ID 309 of the service user Ub. When the access authority management tables 1000Ua to 1000Ub are not distinguished, those access authority management tables are simply referred to as "access authority management table 1000U."

Each access authority management table 1000U is a table in which the access authority of the data user Ci for the data items of the service user U can be set for each provided service 307 on a data item basis. Specifically, for example, for each provided service 307, in an access authority management table 1000U, the access authority of the data user Ci can be set for each first data item (full name 303, address 304, ...) of a first data item group 1011 relating to the personal information 121 of the service user U and for each second data item (date and time 411, action 412, ...) of a second data item group 1012 relating to the action data 122 of the service user U. The first data item group 1011 is a set of first data items from the full name 303 to the telephone number 306 of the first DB 111, and the second data item group 1012 is a set of second data items from the date and time 411 to the location 414.

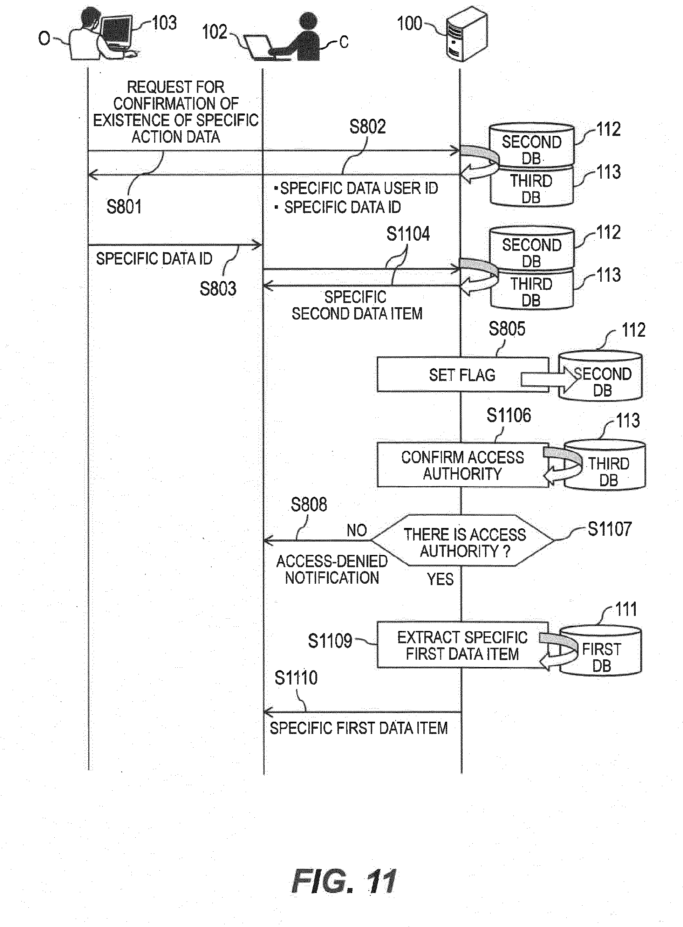

FIG. 11 is an explanatory diagram for illustrating an information providing sequence example (first half) in the second embodiment. The third terminal 103 transmits to the management server 100 a request for confirmation of the existence of a data item (hereinafter referred to as "specific data item") of the specific action data 122 based on an operation by the operator O (Step S1101). The condition 520 or the data user ID 420 is included in the existence confirmation request. The existence confirmation request is transmitted at a fixed cycle or when an operation is input by the operator O.

When the condition 520 is included in the existence confirmation request, the management server 100 refers to the condition management table 502 to identify the data user ID 420 (hereinafter referred to as "specific data user ID 420") which satisfies the condition 520, and refers to the action history DB 401 to identify the data ID 309 (hereinafter referred to as "specific data ID 309") of the action data (hereinafter referred to as "specific action data") 122 corresponding to the condition 520. The management server 100 then transmits the specific data user ID 420 and the specific data ID 309 to the third terminal 103 (Step S802).

Further, when the data user ID 420 is included in the existence confirmation request, the management server 100 refers to the condition management table 502 to identify the condition 520 corresponding to the data user ID 420, refers to the action history DB 401 to identify the specific data ID 309 and the specific data user ID 420 of the specific action data 122 corresponding to the condition 520, and transmits the specific data ID 309 and the specific data user ID 420 to the third terminal 103 (Step S802).

When the specific data ID 309 and the specific data user ID 420 are received, the third terminal 103 transmits an existence notification of the specific data ID 309 to the second terminal 102 identified by the specific data user ID 420 (Step S803).

The second terminal 102 transmits to the management server 100 a request to acquire a second data item, and receives a specific second data item from the management server 100 (Step S1104). The acquisition request includes the specific data ID 309. Specifically, for example, the management server 100 refers to the access authority management table 1000U of the specific data ID 309 in the specific data user Ci, identifies a specific second data item for which access authority is set to "yes" among the second data item group 1012 for the provided service 307 of the specific data user C*i*, extracts the identified second data item from the action history DB 401, and transmits the extracted second data item to the second terminal 102. As a result, the specific data user C*i* can operate the second terminal 102 to acquire a specific second data item from the second DB 112.

After the specific data user ID 420 and the specific data ID 309 are transmitted to the third terminal 103 (Step S802), the management server 100 sets, in the access management table 402, a flag indicating that there is an access request to "1" for the combination of the specific data user ID 420 and the specific data ID 309 (Step S805). The management server 100 may execute Step S805 in response to a request from the second terminal 102 which has received the existence notification of the specific data ID 309.

Then, for the access request having the set flag, the management server 100 refers to the access authority management table 1000U of the specific data user Ci, and confirms whether or not there is access authority for the personal information 121 (Step S1106). Specifically, for example, the management server 100 confirms whether or not, for the provided service 307 of the specific data user C*i*, there is access authority for any of the first data items in the first data item group 1011 of the specific service user U corresponding to the specific data ID 309, that is, whether or not the specific data user C*i* has obtained consent from the specific service user U to access any of the first data items in the first data item group 1011 of the specific service user U.

When the specific data user C*i* does not have access authority for even one specific first data item ("No" in Step S1107), the management server 100 transmits, to the second terminal 102 of the specific data user C*i*, an access-denied notification denying access to the personal information 121 of the specific service user U (Step S808). Meanwhile, when the specific data user C*i* has access authority for a specific first data item ("Yes" in Step S1107), the management server 100 extracts the specific first data item from the first DB 111 (Step S1109), and transmits the extracted specific first data item to the second terminal 102 of the specific data user C*i* (Step S1110).

In this way, according to the second embodiment, access authority can be set for each data item, and thus it is possible for data to used more actively by data users Ci while more specifically protecting the privacy of service users U.

### [Third Embodiment]

In a third embodiment of this invention, description is given of an example of providing service information 121 on a service user U to and from the data users C*i*. It should be noted that, in the third embodiment, in order to focus on the differences from the first embodiment, parts that are the same as in the first embodiment are denoted by using the same reference numerals, and description thereof is omitted.

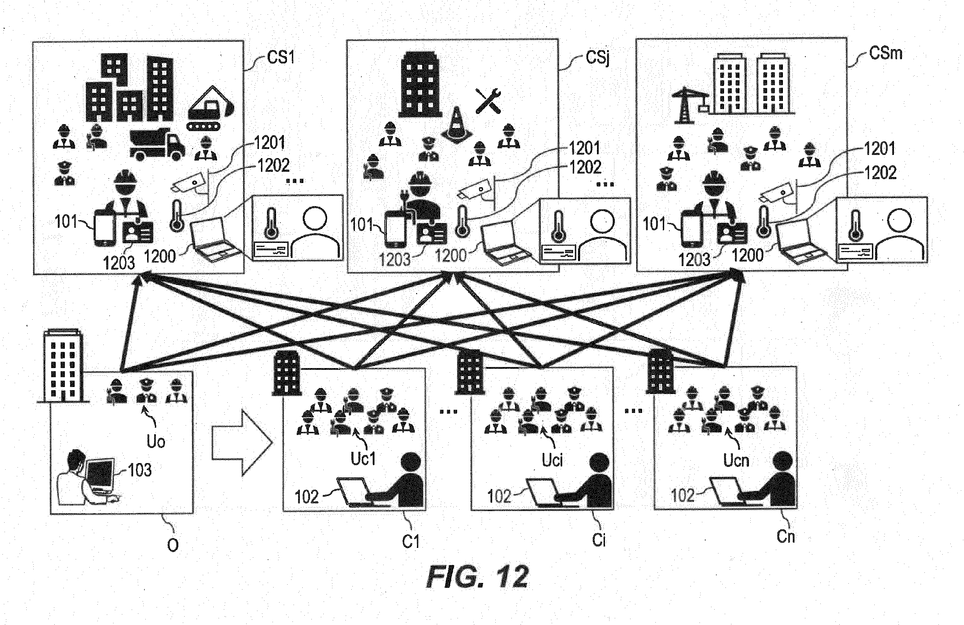

FIG. 12 is an explanatory diagram for illustrating an application example of the third embodiment. In this example, workers of a subcontractor work at construction sites CS1 to CS*m* (when the construction sites are not distinguished, those construction sites are hereinafter simply referred to as "construction site CS*j*"; "*j*" is an integer satisfying 1≤*j*≤*m*, and "*m*" is an integer of 1 or more) under the control of a general construction business (which is generally called "general contractor"). The general contractor is the operator O (general contractor O), the subcontractor is the data user C*i* (subcontractor C*i*), and a worker Uo of the general contractor and workers Uc1 to Uc*n* of the construction company dispatched to the construction site CS*j* are the service users U. When the worker Uo and the workers Uc1 to Uc*n* of the construction company are not distinguished, those workers are simply referred to as "worker U." Further, when the general contractor and the subcontractor are not distinguished, those companies are simply referred to as "construction company O/C."

A fourth terminal 1200, a camera 1201, and a temperature sensor 1202 are arranged at the construction site CS*j*. The fourth terminal 1200 is, for example, a computer managed by the general contractor O, and is communicably coupled to the management server 100 via the network 105. The camera 1201 and the temperature sensor 1202 are coupled to the fourth terminal 1200. image data photographed by the camera 1201 and the temperature detected by the temperature sensor 1202 are transmitted to the fourth terminal 1200.

When the worker U enters the construction site CSj, the face of the worker U is photographed by the camera 1201 and the temperature of the worker U is measured by the temperature sensor 1202. The fourth terminal 1200 authenticates the face of the worker U by using the face image data photographed by the camera 1201, and outputs an alert when the body temperature measured by the temperature sensor 1202 is equal to or higher than a predetermined value. In this case, the worker U cannot enter the construction site CS*j*, and is required to go to a hospital to check whether the worker U is infected with a specific infectious disease. The specific infectious disease is, for example, an infectious disease which spreads through droplets or contact, such as COVID-19.

The worker U has, in addition to a smartphone (there are cases in which a smartphone cannot be carried), a nametag type forward-facing sensor 1203. The full name and a photograph of the face of the worker U are displayed on a front surface of the forward-facing sensor 1203. The worker U attaches the forward-facing sensor 1203 so that a front surface thereof is facing forward from the front of the body. The forward-facing sensor 1203 includes an infrared sensor, an acceleration sensor, and a memory. The forward-facing sensor 1203 transmits the data ID 309 (or service user ID) of the worker U from the front as infrared rays, and receives the data ID 309 of another worker U by using the infrared rays from the infrared sensor of the another worker U to record the data ID 309 in the memory as encounter information together with the date and time. As a result, the forward-facing sensor 1203 detects encounter information indicating who and to what extent the worker U has encountered other people.

Further, the forward-facing sensor 1203 detects body movements (for example, conversation) of the worker U. For example, the forward-facing sensor 1203 is attached to the worker U when the worker U enters, is removed from the worker U when the worker U leaves, and is communicably coupled to the fourth terminal 1200. The fourth terminal 1200 transmits the detection data of the forward-facing sensor 1203 to the management server 100. The management server 100 stores the received detection data as action data 122 in the action history DB 401.

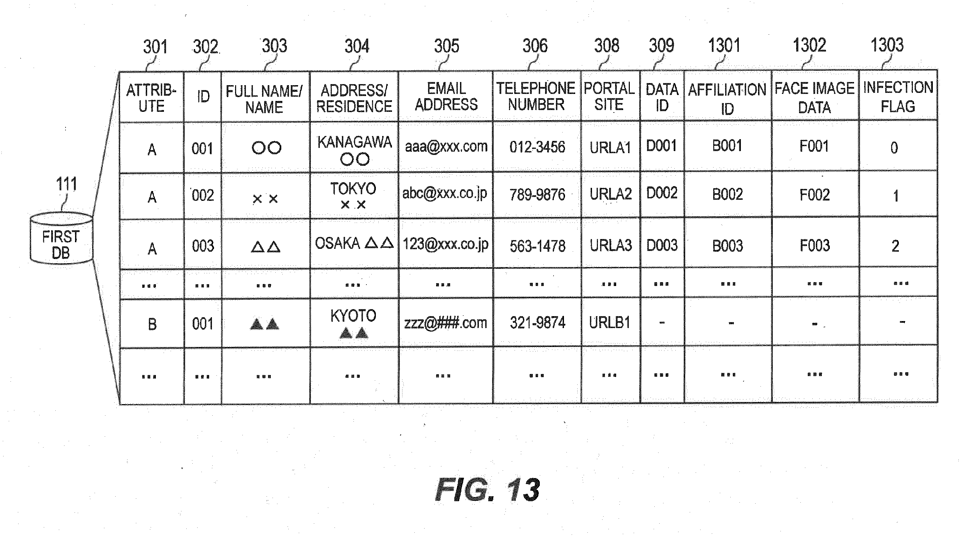

FIG. 13 is a table for showing an example of the first DB 111 in the third embodiment. The first DB 111 includes, as data items, in addition to the attribute 301, the ID 302, the full name/name 303, the address/residence 304, the email address 305, the telephone number 306, the portal site 308, and the data ID 309, an affiliation ID 1301, face image data 1302, and an infection flag 1303. A value "A" of the attribute 301 indicates that the entry is the personal information 121 of the worker U, and "B" indicates that the entry is for the construction company O/C.

The affiliation ID 1301 is identification information for identifying the construction company O/C to which the worker U of the entry is affiliated. The face image data 1302 is face image data of the worker U of the entry, and is used for the face authentication by the fourth terminal 1200. The infection flag 1303 is information indicating an infection status of the worker U of the entry with a specific infectious disease. A value of "0" in the infection flag 1303 indicates that the worker U is not infected, a value of "1" indicates that the worker U is a close contact, and a value of "2" indicates that the worker U is infected. The setting of the infection flag 1303 is changed by operating the fourth terminal 1200.

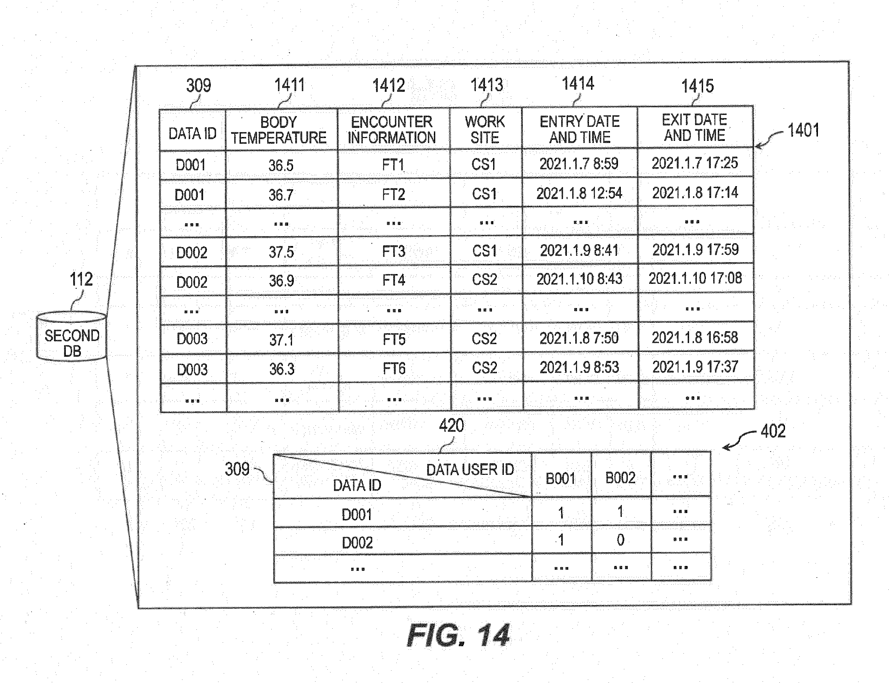

FIG. 14 is a diagram of table for showing an example of the second DB 112 in the third embodiment. The second DB 112 includes an action history DB 1401 and the access management table 402. The action history DB 1401 includes, in addition to the data ID 309, a body temperature 1411, encounter information 1412, a work site 1413, an entry date and time 1414, and an exit date and time 1415. The body temperature 1411 is the body temperature of the worker U identified by the data ID 309 of the entry, which is measured by the temperature sensor 1202.

The encounter information 1412 includes the data ID 309 of another worker U who the worker U identified by the data ID 309 of the entry has encountered, and the date and time of the reception of the data ID 309 of the another worker U. The encounter information 1412 is received by the forward-facing sensor 1203. The work site 1413 is the construction site CSj at which the worker U identified by the entry data ID 309 worked. The entry date and time 1414 is the date and time at which the worker U identified by the data ID 309 of the entry entered the work site 1413. The exit date and time 1415 is the date and time at which the worker U identified by the data ID 309 of the entry exited the work site 1413.

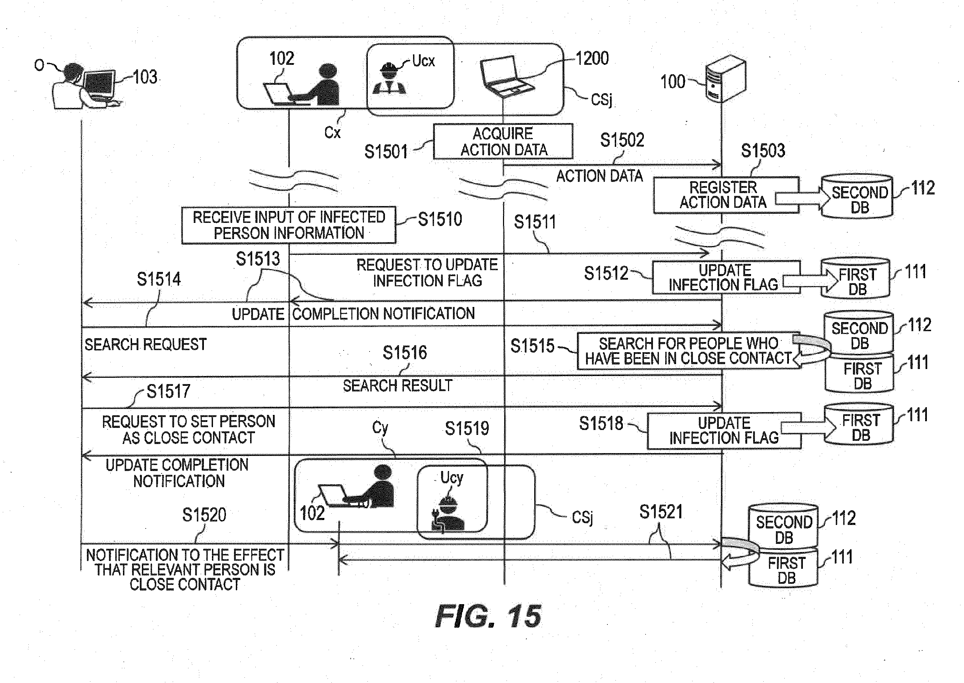

FIG. 15 is an explanatory diagram for illustrating an information providing sequence example in the third embodiment. In FIG. 15, as an example, a worker Ucx is affiliated to a subcontractor Cx, and a worker Ucy is affiliated to a subcontractor Cy (≠Cx). The worker Ucx and the worker Ucy both work at the construction site CS*j*.

First, the fourth terminal 1200 of the construction site CS*j* is coupled to, for example, the forward-facing sensor 1203 of the worker Ucx at the time of exiting, acquires the action data of the worker Ucx from the forward-facing sensor 1203 (Step S1501), and transmits the acquired action data to the management server 100 (Step S1502). When the action data is received, the management server 100 registers the action data in the second DB 112 (Step S1503).

It is assumed that, after this, it is discovered that the worker Ucx is infected with a specific infectious disease, and that this is reported to the subcontractor Cx, which is the affiliated organization of the worker Ucx. In this case, the second terminal 102 of the subcontractor Cx receives input of infected person information indicating that the worker Ucx is infected with a specific infectious disease (Step S1510), and transmits to the management server 100 a request to update the infection flag including the infected person information (Step S1511).

When the infected person information is received, the management server 100 updates the infection flag 1303 to "2", indicating infection, in the entry of the worker Ucx in the first DB 111 (Step S1512), and transmits an update completion notification to a third terminal 103 and the second terminal 102 of the subcontractor Cx (Step S1513). The update completion notification includes the data ID 309 of the infected person.

When the update completion notification is received, the first terminal 101 transmits a search request to the management server 100 (Step S1514). The search request is a request for searching for close contacts with the worker Ucx at the construction site CSj, and includes the data ID 309 of the infected person.

When the search request is received, the management server 100 refers to the first DB 111 and the second DB 112 to search for people who have been in close contact with the worker Ucx (Step S1515). Specifically, for example, the management server 100 refers to the second DB 112, and identifies from the second DB 112 entries overlapping, at the same work site as the worker Ucx, with the period from the entry date and time 1414 to the exit date and time 1415 of the worker Ucx, and having the data ID 309 included in the encounter information 1412 of the worker Ucx. Then, the management server 100 identifies the worker Ucy of the entry in the first DB 111 having the data ID 309 of the identified entry as a close contact.

The management server 100 transmits the data ID 309 of the worker Ucy identified as a close contact to the first terminal 101 as the search result of Step S1515 (Step S1516). The third terminal 103 transmits to the management server 100 a request to set the person (worker Ucy) of the data ID 309 in the search result as a close contact (Step S1517). When the close contact setting request is received, the management server 100 updates the infection flag 1303 of the entry of the worker Ucy in the first DB 111 identified by the data ID 309 of the search result to "1", indicating a close contact (Step S1518), and transmits an update completion notification to the first terminal 101 (Step S1519).

Then, the third terminal 103 transmits a notification to the effect that the person (worker Ucy) of the data ID 309 in the search result is a close contact to the second terminal 102 of the subcontractor Cy, which is the affiliated organization of the worker Ucy (Step S1520). The second terminal 102 of the subcontractor Cy uses the data ID 309 of the worker Ucy to refer to the personal information 121 and the action data 122 of the worker Ucy from the first DB 111 and the second DB 112 (Step S1521). In this way, it is possible to notify the second terminal 102 of the subcontractor Cy, which is the affiliated organization of the worker Ucy, of the information indicating that the worker Ucy is a close contact while keeping the information a secret from the subcontractor Cx. Similarly, the fact that the worker Ucx of the subcontractor Cx is an infected person can be kept secret from the subcontractor Cy.

In addition, in the third embodiment described above, the operator is the general contractor O, but the operator may be an entity other than the general contractor O. In this case, the third terminal 103 is a terminal of an operator other than the general contractor O. The terminal of the operator does not have access authority for the personal information 121 in the first DB 111, but in Step S1513, Step S1514, Step S1516, Step S1517, and Step S1520, the terminal of the operator transmits and receives the data ID 309. As a result, information can be provided while protecting the personal information 121 of the worker U. The terminal of the general contractor O may be the fourth terminal 1200 or a terminal (not shown) capable of accessing the first DB 111.

Further, in the first embodiment to the third embodiment described above, the management server 100 may monitor a data amount of the action data 122 for each data ID 309 in the second DB 112, and migrate the action data 122 of the ID 309 which is equal to or more than a predetermined data amount to the first DB 111. When the action data 122 is equal to or more than the predetermined data amount, there is a possibility that the person is guessed. Therefore, by migrating the action data 122 to the first DB 111, the privacy of the person can be protected.

The information providing methods according to the first embodiment to the third embodiment described above can also be configured as in the items (1) to (11) below.
(1) There is provided an information providing method to be executed by an information providing system 1, the information providing system 1 including a management server 100, a first terminal 101 of a first user (service user U), a second terminal 102 of a second user (data user C*i*) which provides information to the first user (service user U), and a third terminal 103 of an operator O which operates provision of the information from the second user to the first user by using the management server 100, the management server 100 including a first DB 111 configured to store, for each first user, personal information 121 on the each first user and a data ID 309 unique to the each first user associated with the personal information 121, a second DB 112 configured to store action data 122 indicating an action of a person for each data ID 309, and a third DB 113 configured to manage an access authority from the second user for the data ID 309 in the first DB 111, the information providing method including: a first step (Step S804) of acquiring, by the second terminal 102, the action data 122 corresponding to the data ID 309 from the management server 100 when the second terminal 102 transmits to the management server 100 a request to acquire the personal information 121 including the data ID 309; a second step ("Yes" in Step S805 to Step S807, Step S809, and Step S810) of acquiring, by the second terminal 102, the personal information 121 from the management server 100 when the second user has access authority for the personal information 121 associated with the data ID 309 ("Yes" in Step S807); and a third step (Step S922) of transmitting, by the second terminal 102, the information to the first terminal 101 of the first user identified by the personal information 121 when the second terminal 102 acquires the action data 122 and the personal information 121.
(2) In the information providing method according to the above-mentioned item (1), the third DB 113 is configured to manage the access authority from the second user for the data ID 309 of each of the first DB 111 and the second DB 112, and the first step includes acquiring, by the second terminal 102, when the second terminal 102 transmits to the management server 100 the request to acquire personal information including the data ID 309, the action data 122 corresponding to the data ID 309 from the management server 100 when the second user has access authority for the data ID 309 in the second DB 112.
(3) In the information providing method according to the above-mentioned item (1), the third DB 113 is configured to store a condition 520 for searching the action data 122 for each user ID (data user ID 420) of the second user, the information providing method further includes a fourth step (Step S801 to Step S803) of acquiring, by the third terminal 103, when the third terminal 103 transmits a request including the condition 520 to the management server 100, the data ID 309 included in the action data 122 corresponding to the condition 520 from the management server 100 and transmitting the acquired data ID 309 to the second terminal 102, and the first step includes acquiring, by the second terminal 102, when the second terminal 102 transmits to the management server 100 the request to acquire personal information 121 including the data ID 309 transmitted from the third terminal 103 in the fourth step, the action data 122 corresponding to the data ID 309 from the management server 100.
(4) In the information providing method according to the above-mentioned item (1), the third DB 113 is configured to store a condition 520 for searching the action data 122 for each user ID (data user ID 420) of the second user, the information providing method further includes a fourth step (Step S801 to Step S803) of acquiring, by the third terminal 103, when the third terminal 103 transmits a request including the user ID of the second user to the management server 100, the data ID 309 included in the action data 122 corresponding to the condition 520 of the user ID of the second user from the management server 100 and transmitting the acquired data ID 309 to the second terminal 102, and the first step includes acquiring, by the second terminal 102, when the second terminal 102 transmits to the management server 100 the request to acquire personal information 121 including the data ID 309 transmitted from the third terminal 103 in the fourth step, the action data 122 corresponding to the data ID 309 from the management server 100.
(5) In the information providing method according to the above-mentioned item (1), the management server 100 includes page information (portal site 308) accessible by the first terminal 101, and the information providing method further includes: a fifth step (Step S931 and Step S932) of transmitting, by the second terminal 102, when the second terminal 102 does not have access authority by the second user for the personal information 121 associated with the data ID 309 ("No" in Step S807), the information from the management server 100 to the management server 100 and storing the information in the page information; and a sixth step (Step S934 and Step S935) of acquiring, by the first terminal 101, the information stored in the page information.
(6) In the information providing method according to the above-mentioned item (1), the third DB 113 is configured to manage, separately for each data ID 309, access authority from the second user for each first data item of a first data item group 1011 forming the personal information 121 in the first DB 111, and the second step includes acquiring, by the second terminal 102, when a first data item which is associated with the data ID 309 included in the request to acquire personal information and for which the second user has access authority exists ("Yes" in Step S1107), the first data item from the management server 100 ("Yes" in Step S805, Step S1106, and Step S1107, Step S1109, and Step S1110).
(7) In the information providing method according to the above-mentioned item (1), the third DB 113 is configured to manage, separately for each data ID 309, access authority from the second user for each second data item of a second data item group 1012 forming the action data 122 in the second DB 112, and the first step includes acquiring, by the second terminal 102, when the second terminal 102 transmits to the management server 100 the request to acquire personal information including the data ID 309, and when a second data item which is associated with the data ID 309 and for which the second user has access authority exists, the second data item from the management server 100 (Step S1104).
(8) There is provided an information providing method to be executed by an information providing system, the information providing system including a terminal 102 of an affiliated organization (subcontractor C) of a user (worker U), a terminal 103 of an operator O (which may be a general contractor) which operates provision of information to the affiliated organization of the user, and a management server 100 configured to manage information on the user, the management server 100 including a first DB 111 configured to store, for each user, personal information 121 on the each user and a data ID 309 unique to the each user associated with the personal information 121, a second DB 112 configured to store, for each data ID 309, action data 122 indicating a position over time and action details of a person, the personal information 121 including a status of the user (infection flag 1303) and an ID of the affiliated organization of the user (affiliation ID 1301), the information providing method including: a first step (Step S1511 to Step S1513) of accessing, by the terminal 102 of the affiliated organization Cx of a first user Ucx, the management server 100 and updating the status of the first user Ucx in the first DB 111 to a first status (a value "2" of the infection flag 1303); a second step (Step S1514 to Step S1516) of accessing, by the terminal 103 of the operator O, the management server 100 when an update has been executed in the first step, and acquiring, based on the action data 122 in the second DB 112, the data ID 309 of a second user Ucy who is present at the same time and at the same location as the first user Ucx and who is affiliated with an organization different from the affiliated organization of the first user Ucx from the first DB 111; a third step (Step S1517 to Step S1519) of accessing, by the terminal 103 of the operator O, the management server 100 and updating the status of the second user Ucy in the first DB 111 to a second status (a value "1" of the infection flag 1303); and a fourth step (Step S1520) of notifying, by the terminal 103 of the operator O, a terminal 102 of the affiliated organization Cy of the second user Ucy of the data ID 309 of the second user Ucy when an update has been executed in the third step.
(9) In the information providing method according to the above-mentioned item (8), the information providing method further includes a fifth step (Step S1521) of accessing, by the terminal 102 of the affiliated organization of the second user Ucy, the management server 100 and acquiring information indicating the second status of the second user from the first DB 111.
(10) In the information providing method according to the above-mentioned item (8), the action data 122 includes encounter information 1412 including a data ID 309 of another person who the person has encountered, and the second step includes accessing, by the terminal 103 of the operator O, the management server 100 when an update has been executed in the first step, and acquiring, based on the action data 122 in the second DB 112, the data ID 309 of a second user Ucy who encountered the first user Ucx at the same time and at the same location as the first user Ucx and who is affiliated with an organization Cy different from the affiliated organization Cx of the first user Ucx from the first DB 111.
(11) In the information providing method according to the above-mentioned item (8), the first status is a status indicating a person infected with a specific infectious disease, and the second status is a status indicating a person who is a close contact of the person infected with the specific infectious disease.

It should be noted that this disclosure is not limited to the above-mentioned embodiments, and encompasses various modification examples and the equivalent configurations within the scope of the appended claims without departing from the gist of this disclosure. For example, the above-mentioned embodiments are described in detail for a better understanding of this disclosure, and this disclosure is not necessarily limited to what includes all the configurations that have been described. Further, a part of the configurations according to a given embodiment may be replaced by the configurations according to another embodiment. Further, the configurations according to another embodiment may be added to the configurations according to a given embodiment. Further, a part of the configurations according to each embodiment may be added to, deleted from, or replaced by another configuration.

Further, a part or entirety of the respective configurations, functions, processing modules, processing means, and the like that have been described may be implemented by hardware, for example, may be designed as an integrated circuit, or may be implemented by software by a processor interpreting and executing programs for implementing the respective functions.

The information on the programs, tables, files, and the like for implementing the respective functions can be stored in a storage device such as a memory, a hard disk drive, or a solid state drive (SSD) or a recording medium such as an IC card, an SD card, or a DVD.

Further, control lines and information lines that are assumed to be necessary for the sake of description are described, but not all the control lines and information lines that are necessary in terms of implementation are described. It may be considered that almost all the components are connected to one another in actuality.

## Claims

1. An information providing method to be executed by an information providing system,
the information providing system including a management server, a first terminal of a first user, a second terminal of a second user which provides information to the first user, and a third terminal of an operator which operates provision of the information from the second user to the first user by using the management server,
the management server including a first database configured to store, for each first user, personal information on the each first user and a data ID unique to the each first user associated with the personal information, a second database configured to store action data indicating an action of a person for each data ID, and a third database configured to manage an access authority from the second user for the data ID in the first database,
the information providing method comprising:
a first step of acquiring, by the second terminal, the action data corresponding to the data ID from the management server when the second terminal transmits to the management server a request to acquire the personal information including the data ID;
a second step of acquiring, by the second terminal, the personal information from the management server when the second user has access authority for the personal information associated with the data ID; and
a third step of transmitting, by the second terminal, the information to the first terminal of the first user identified by the personal information when the second terminal acquires the action data and the personal information.

2. The information providing method according to claim 1,
wherein the third database is configured to manage the access authority from the second user for the data ID of each of the first database and the second database, and
wherein the first step includes acquiring, by the second terminal, when the second terminal transmits to the management server the request to acquire personal information including the data ID, the action data corresponding to the data ID from the management server when the second user has access authority for the data ID in the second database.

3. The information providing method according to claim 1,
wherein the third database is configured to store a condition for searching the action data for each user ID of the second user,
wherein the information providing method further comprises a fourth step of acquiring, by the third terminal, when the third terminal transmits a request including the condition to the management server, the data ID included in the action data corresponding to the condition from the management server and transmitting the acquired data ID to the second terminal, and
wherein the first step includes acquiring, by the second terminal, when the second terminal transmits to the management server the request to acquire personal information including the data ID transmitted from the third terminal in the fourth step, the action data corresponding to the data ID from the management server.

4. The information providing method according to claim 1,
wherein the third database is configured to store a condition for searching the action data for each user ID of the second user,
wherein the information providing method further comprises a fourth step of acquiring, by the third terminal, when the third terminal transmits a request including the user ID of the second user to the management server, the data ID included in the action data corresponding to the condition of the user ID of the second user from the management server and transmitting the acquired data ID to the second terminal, and
wherein the first step includes acquiring, by the second terminal, when the second terminal transmits to the management server the request to acquire personal information including the data ID transmitted from the third terminal in the fourth step, the action data corresponding to the data ID from the management server.

5. The information providing method according to claim 1,
wherein the management server includes page information accessible by the first terminal, and
wherein the information providing method further comprises:
a fifth step of transmitting, by the second terminal, when the second terminal does not have access authority by the second user for the personal information associated with the data ID, the information from the management server to the management server and storing the information in the page information; and
a sixth step of acquiring, by the first terminal, the information stored in the page information.

6. The information providing method according to claim 1,
wherein the third database is configured to manage, separately for each data ID, access authority from the second user for each first data item of a first data item group forming the personal information in the first database, and
wherein the second step includes acquiring, by the second terminal, when a first data item which is associated with the data ID included in the request to acquire personal information and for which the second user has access authority exists, the first data item from the management server.

7. The information providing method according to claim 1,
wherein the third database is configured to manage, separately for each data ID, access authority from the second user for each second data item of a second data item group forming the action data in the second database, and
wherein the first step includes acquiring, by the second terminal, when the second terminal transmits to the management server the request to acquire personal information including the data ID, and when a second data item which is associated with the data ID and for which the second user has access authority exists, the second data item from the management server.

8. An information providing method to be executed by an information providing system,
the information providing system including a terminal of an affiliated organization of a user, a terminal of an operator which operates provision of information to the affiliated organization, and a management server configured to manage information on the user,
the management server including a first database configured to store, for each user, personal information on the each user and a data ID unique to the each user associated with the personal information, a second database configured to store, for each data ID, action data indicating a position over time and action details of a person, the personal information including a status of the user and an ID of the affiliated organization of the user,
the information providing method comprising:
a first step of accessing, by the terminal of the affiliated organization of a first user, the management server and updating the status of the first user in the first database to a first status;
a second step of accessing, by the terminal of the operator, the management server when an update has been executed in the first step, and acquiring, based on the action data in the second database, the data ID of a second user who is present at the same time and at the same location as the first user and who is affiliated with an organization different from the affiliated organization of the first user from the first database;
a third step of accessing, by the terminal of the operator, the management server and updating the status of the second user in the first database to a second status; and
a fourth step of notifying, by the terminal of the operator, a terminal of the affiliated organization of the second user of the data ID of the second user when an update has been executed in the third step.

9. The information providing method according to claim 8, further comprising a fifth step of accessing, by the terminal of the affiliated organization of the second user, the management server and acquiring information indicating the second status of the second user from the first database.

10. The information providing method according to claim 8,
wherein the action data includes encounter information including a data ID of another person who the person has encountered, and
wherein the second step includes accessing, by the terminal of the operator, the management server when an update has been executed in the first step, and acquiring, based on the action data in the second database, the data ID of a second user who encountered the first user at the same time and at the same location as the first user and who is affiliated with an organization different from the affiliated organization of the first user from the first database.

11. The information providing method according to claim 8, wherein the first status is a status indicating a person infected with a specific infectious disease, and the second status is a status indicating a person who is a close contact of the person infected with the specific infectious disease.
